# EUROPEAN PATENT SPECIFICATION

(11) **EP 3 211 851 B1**
(45) Date of publication and mention of the grant of the patent: **18.12.2019**
(21) Application number: 15862073.2
(22) Date of filing: 12.03.2015
(51) Int. Cl.: H04L 29/08, H04L 29/06, H04L 12/937, G06F 13/42, G06F 13/40, G06F 21/62

(54) **METHOD FOR ACCESSING SWITCH EXTERNAL MEMORY**
VERFAHREN ZUM ZUGRIFF AUF EXTERNEN SCHALTERSPEICHER
PROCÉDÉ D'ACCÈS À LA MÉMOIRE EXTERNE D'UN COMMUTATEUR

(30) Priority: 19.11.2014 CN 201410665938
(43) Date of publication of application: 30.08.2017
(73) Proprietor: Institute of Acoustics, Chinese Academy of Sciences, Haidian District Beijing 100190 (CN); Beijing Intellix Technologies Co. Ltd., Beijing 100190 (CN)
(72) Inventor: WANG, Lingfang, Beijing 100190 (CN); WANG, Jinlin, Beijing 100190 (CN); QI, Weining, Beijing 100190 (CN)
(74) Representative: Hanna Moore + Curley
(86) International application number: PCT/CN2015/074086
(87) International publication number: WO 2016/078260

(56) References cited:
- CN-A- 101 047 594
- CN-A- 103 283 190
- CN-A- 103 297 441
- US-A1- 2013 263 214
- US-A1- 2014 247 751
- US-A1- 2014 247 751

## Description

### TECHNICAL FIELD

The invention relates to the field of network technique, and particularly to a method for accessing a switch external memory.

### BACKGROUND OF THE INVENTION

Investigation has been made on a Software Defined Network (SDN) in the network industry since the year of 2008, thus resulting in a new round of extensive innovation. The SDN was initially proposed for the purpose of dealing with network failures or network attacks. In a distributed routing architecture of the internet, if there is a network failure or attack, it may be difficult to start the entire network from a point, and since exchanging of a route is not centrally controlled, the route will converge in a magnitude order of minutes, thus significantly failing to make a rapid response. In view of this, some investigators proposed a view that a central control point issues a control strategy and a hop-by-hop switching device, i.e., the concept of SDN.

With the proposal of the SDN, it is necessary to verify it against a real device/protocol/network/application, thus resulting in OpenFlow of ONF. OpenFlow relates to two entities of a controller and a switch. OpenFlow is a southbound interface of the controller to communicate with the switch, and to pass control information, data, and states, etc. OpenFlow was initially configured to optimize a control process and a data flow path and to enhance management and control in a campus network, an enterprise network, and a data center network. Due to the flexibility thereof in controlling a network, the network investigators make investigation on a future network architecture and protocol using OpenFlow, thus resulting in Protocol Oblivious Forwarding (POF) available from Huawei Corp., and the P4 language led by Nick Mckeown in U.S.A. The investigation on OpenFlow may involve three aspects: a controller, a line protocol, and switches, wherein the controller represents a control plane, the switch represents a data plane, and the line protocol represents a bridge between them. OpenFlow is focused on programmability of the network, wherein it was early focused on programmability of the control plane, and now coming to programmability of the data plane.

Programmability of the data plane is focused on the use of computing resources and network resources of the switch without taking efficient storage resources into account. The switch in the prior art fails to address the issue of controlling the storage resources, thus making it impossible to access efficiently the switch external memory from the control plane and the data plane.

The relevant state of the art is represented by US 2014/247751 A1 and US 2013/263214 A1.

### SUMMARY OF THE INVENTION

The present teaching provides a method as detailed in claim 1. Advantageous features are provided in dependent claims. The objective of the invention is to solve the problem in the prior art of failing to access efficiently a switch external memory from a control plane and a data plane, by providing a method for accessing a switch external memory from a control plane and a data plane.

In order to attain the object above, it is provided a method for accessing a switch external memory according to claim 1, with step
1), issuing, by the control module, information about an authorized information about an authorized protocol and an authorized file I/O operation;
step 2), receiving, by the switch, a file I/O operation instruction, and determining whether an operating entity has an authority to perform the authorized file I/O operation; and
step 3), upon determining that the operating entity has the authority to perform the authorized file I/O operation, extracting, by the switch, an instruction index and parameters from the file I/O operation instruction, and executing the authorized file I/O operation.

In this method, in the step 1), the information about the authorized entity and the authorized operation may be issued to the switch in a list of authorized operations, the list of authorized operations may be accomplished by employing a set of file operations defined in POSIX.1.

In this method, the step 2) may further comprise:
extracting, by the switch upon receiving the file I/O operation instruction, the operating entity and the file I/O operation instruction index from the instruction, comparing the information extracted from the instruction with the authorized information stored in the switch in the step 1), judging whether the operating entity has the authority of the file I/O operation instruction, if yes, proceeding to the step 3); otherwise, rejecting the operation, and generating and returning a rejection message to a sender of the file I/O operation instruction.

In this method, the step 3) may further comprise invoking a corresponding local file I/O operation instruction according to the extracted result, generating a corresponding operation result, and finally encapsulating the operation result into a message, and then returning the message to an invoker.

The invention solves the problem in the prior art of failing to access the programmable switch external memory from the control plane and the data plane.

### BRIEF DESCRIPTION OF THE DRAWINGS

Fig.1 is a schematic diagram of a connection relationship between a controller and a switch (including an external memory);
Fig.2 is a diagram of a file I/O module within the switch;
Fig.3 is a flow chart of an access authorization process in a method according to an embodiment of the invention;
Fig.4 is a flow chart of a file I/O operation control process in a method according to an embodiment of the invention;
Fig.5 is a flow chart of a file I/O operation execution process in a method according to an embodiment of the invention; and
Fig.6 is a schematic diagram of a forwarding process at an NDN node.

### DETAILED DESCRIPTION OF THE INVENTION

The invention will be further described below with reference to the drawings, which represent embodiments.

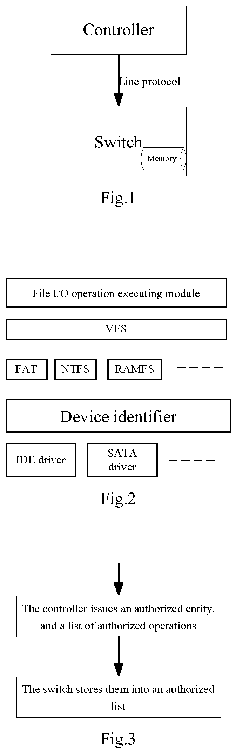

A method for accessing a switch external memory from a control plane and a data plane according to the invention relates to entities of a control module and a switch. The control module can be a controller or an application, wherein the controller is functionally similar to a controller in OpenFlow, and responsible for access authorization control on the switch external memory, defining an access to the switch external memory in a specific protocol, in addition to the roles of the controller in OpenFlow. The switch is functionally similar to a switch in OpenFlow, is provided with an external memory device, and has a function of implementing access operation to the external memory device, in addition to the roles of the switch in OpenFlow. As illustrated in Fig.1, the control module and the switch communicate with each other in a line protocol.

The switch and the external memory device can communicate with each other in a way of bus such as IDE, SATA, fibre channel, SCSI. As illustrated in Fig.2, a local access can be implemented in an operating system of the switch using a VFS/file system/device identification/device driver, or by mapping the VFS directly to the device driver. Communication between the switch and the external memory device is irrelevant, so a detailed description thereof will be omitted here.

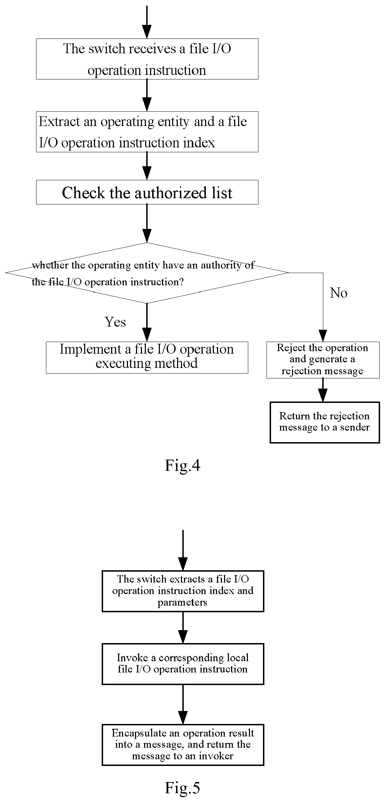

A method for accessing a switch external memory from a control plane and a data plane according to an embodiment comprises:
Step 1, referring to Fig.3, a control module issues information about an authorized entity and an authorized operation to a switch, and the switch receives and stores the authorized information.
   The authorized entity as referred to in this step can be a certain application program or protocol performed in the switch, and the authorized operation can be any of a plurality of operations including Read, Write, Delete, and other operations. In an optional implementation, the information about the authorized entity and the authorized operation is issued to the switch in a list of authorized operations. The list of authorized operations can be accomplished by employing a set of file operations defined in POSIX.1, or self-defined file operations, or a subset thereof, and represented as a binary mapping table, wherein a bit of 1 represents Authorized, and a bit of 0 represents Non-authorized, thus greatly reducing the scale of the list of authorized operations issued by the control module to the switch. The list of authorized operations can alternatively be a text string at the cost of an increased overhead.
Step 2), referring to Fig.4, the switch receives a file I/O operation instruction, extracts an operating entity and a file I/O operation instruction index (which is a binary mapping code corresponding to the instruction) from the instruction, compares the information extracted from the instruction with the authorized information stored in the switch in the step 1), judges whether the operating entity has the authority of the file I/O operation instruction, and if yes, the switch will proceed to the next step; otherwise, the switch will reject the operation, and generate and return a rejection message to a sender of the file I/O operation instruction.
Step 3), referring to Fig.5, the switch extracts the file I/O operation instruction index and parameters from the received file I/O operation instruction, invokes a corresponding local file I/O operation instruction according to the extracted result, generates a corresponding operation result, and finally encapsulates the operation result into a message, and then returns the message to an invoker.

For the sake of convenient understanding, the method according to an embodiment of the invention will be described below in details with reference to a particular example thereof.

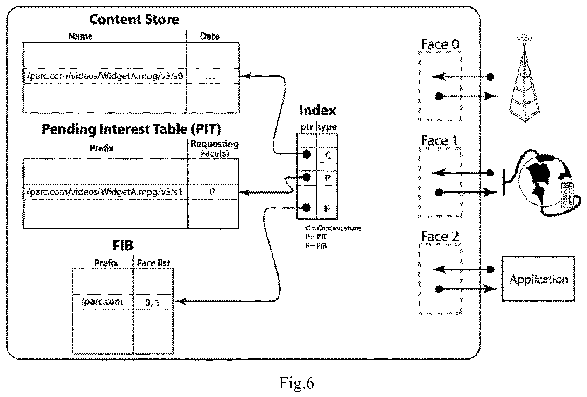

As illustrated in Fig. 6, in an NDN node in a named data networking, a Data component in a Content Store table needs to be supported by an external memory device, and it is assumed that the data are stored in a file. In this scenario, it is assumed that an NDN protocol is developed by employing an SDN method, and an Ethernet message is applied in the switch, wherein the type field Ethertype corresponding to the NDN in the Ethernet message is 0x8099 (only by way of an example). The method according to an embodiment of the invention will be described below with reference to this scenario.

The control module authorizes the access-authorized entity (i.e., Ethertype=0x8099) to have reading, writing, and deleting operations for a file in a directory thereof (other operations are prohibited by default) (it is assumed that there are 32 bits in an authorized mapping table, wherein each bit corresponds to one of the operations, and these three operations correspond to three bits in the uppermost byte, then the bitmap will correspond to hexadecimal 0xe0000000). The control module passes authorization information "Ethertype=0x8099, PermittedOperation=0xe0000000" to the switch in a list of authorized operations over a secured channel, and the switch stores the identifier Ethertype=0x8099 of the authorized entity and a permitted operation code PermittedOperation=0xe0000000.

It is assumed that the switch receives a message of Ethertype=0x8099, i.e., a message of the NDN; and also an action in a mapping action table (a table in OpenFlow in the SDN southbound interface protocol, wherein the table includes field name, value, action, and other information) requires a payload of the message to be written into a local file. The switch receiving a file writing operation extracts an operating entity (i.e., the NDN) and a file writing operation instruction index, refers to the authorized list, and determines that the file writing operation instruction of the NDN is permitted, then the switch executes a file I/O operation.

The switch extracts the file writing operation instruction index and the payload of the message, invokes a local file writing operation instruction to execute a writing operation, encapsulates an operation result into a message, and returns the message to an action invoker in the mapping action table.

If an action requires a directory creating operation, the switch, when receiving a directory creating operation, extracts an operating entity (i.e., the NDN) and a directory operation instruction index, refers to the authorized list, and determines that the directory creating operation instruction of the NDN is prohibited, then the switch rejects the operation, and generates and returns a rejection message to an action invoker in the mapping action table.

Lastly it shall be noted that the embodiments above are merely intended to illustrate but not limit the technical solution according to the invention.

## Claims

1. A method for accessing a switch external memory of a switch, wherein a control module represents a control plane and the switch external memory represents a data plane, and wherein the accessing is from the control module in the control plane to the switch external memory in the data plane, the method comprising:
step 1), issuing, by the control module, information about an authorized protocol and an authorized file I/O operation, the authorized file I/O operation being an operation for accessing the switch external memory, receiving the information by the switch, and storing authorized information by the switch; wherein the authorized information includes the authorized protocol and the authorized file I/O operation;
step 2), receiving, by the switch, a file I/O operation instruction, and determining whether an operating entity has an authority to perform the authorized file I/O operation according to the file I/O operation instruction and the authorized information obtained in the step 1); wherein the authorized file I/O operation is one of reading, writing and deleting operations for a file in a directory of the switch external memory, and
step 3), upon determining that the operating entity has the authority to perform the authorized file I/O operation, extracting, by the switch, an instruction index and parameters from the file I/O operation instruction, and executing the authorized file I/O operation.

2. The method for accessing the switch external memory according to claim 1, wherein in the step 1), the information about the authorized protocol and the authorized file I/O operation is issued to the switch in a list of authorized operations by the control module, wherein the list of authorized operations is accomplished by employing a set of file operations defined in POSIX.1 by the control module.

3. The method for accessing the switch external memory according to claim 1, wherein the step 2) further comprises:
extracting, by the switch, upon reception of the file I/O operation instruction, the authorized protocol and an index of the file I/O operation instruction from the received file I/O operation instruction,
comparing, by the switch, the information extracted with the authorized information stored in the switch in the step 1),
judging, by the switch, whether the authorized protocol has the authority of the file I/O operation instruction,
in a case where it is judged by the switch that the protocol has the authority of the file I/O operation instruction, proceeding to the step 3); and
in a case where it is judged by the switch that the protocol has not the authority of the file I/O operation instruction, rejecting, by the switch, the file I/O operation instruction and generating and returning, by the switch, a rejection message to a sender of the file I/O operation instruction.

4. The method for accessing the switch external memory according to claim 1, wherein the step 3) further comprises:
extracting, by the switch, from the received file I/O operation instruction , an index of the file I/O operation instruction and parameters,
invoking, by the switch, a corresponding local file I/O operation instruction according to the information extracted,
generating, by the switch, an operation result of the corresponding local file I/O operation instruction ,
encapsulating, by the switch, the operation result into a message, and then returning, by the switch, the message to an invoker.

## Patentansprüche

1. Verfahren zum Zugreifen auf einen schalterexternen Speicher eines Schalters, wobei ein Steuermodul eine Steuerebene darstellt und der schalterexterne Speicher eine Datenebene darstellt und wobei das Zugreifen aus dem Steuermodul in der Steuerebene zu dem schalterexternen Speicher in der Datenebene erfolgt, das Verfahren umfassend:
Schritt 1), Ausgeben von Informationen über ein autorisiertes Protokoll und einen autorisierten E/A-Dateivorgang durch das Steuermodul, wobei der autorisierte E/A-Vorgang ein Vorgang zum Zugreifen auf den schalterexternen Speicher ist, Empfangen der Informationen durch den Schalter und Speichern autorisierter Informationen durch den Schalter; wobei die autorisierten Informationen das autorisierte Protokoll und den autorisierten E/A-Dateivorgang beinhalten;
Schritt 2), Empfangen eines E/A-Dateivorgangs durch den Schalter und Ermitteln, ob eine Betriebsentität eine Befugnis hat, den autorisierten E/A-Dateivorgang gemäß dem E/A-Dateivorgangsbefehl und den in Schritt 1) erhaltenen autorisierten Informationen durchzuführen; wobei der autorisierte E/A-Dateivorgang einer ist aus einem Lese-, einem Schreib- und einem Löschvorgang für eine Datei in einem Verzeichnis des schalterexternen Speichers, und
Schritt 3), nach dem Ermitteln, dass die Betriebsentität die Befugnis hat, den autorisierten E/A-Dateivorgang durchzuführen, Extrahieren eines Befehlsindex und von Befehlsparametern aus dem E/A-Dateivorgangsbefehl durch den Schalter und Ausführen des autorisierten E/A-Dateivorgangs.

2. Verfahren zum Zugreifen auf den schalterexternen Speicher nach Anspruch 1, wobei in Schritt 1) die Informationen über das autorisierte Protokoll und den autorisierten E/A-Dateivorgang in einer Liste autorisierter Vorgänge durch das Steuermodul an den Schalter ausgegeben werden, wobei die Liste autorisierter Vorgänge durch Anwenden einer Gruppe von Dateivorgängen erreicht wird, die in POSIX.1 von dem Steuermodul definiert sind.

3. Verfahren zum Zugreifen auf den schalterexternen Speicher nach Anspruch 1, wobei Schritt 2) ferner umfasst:
Extrahieren des autorisierten Protokolls und eines Index des E/A-Dateivorgangsbefehls von dem empfangenen E/A-Dateivorgangsbefehl nach Empfang des E/A-Dateivorgangsbefehls durch den Schalter,
Vergleichen der extrahierten Informationen mit den autorisierten Informationen, die in Schritt 1) in dem Schalter gespeichert werden, durch den Schalter,
Feststellen durch den Schalter, ob das autorisierte Protokoll die Befugnis zum E/A-Dateivorgangsbefehl aufweist,
falls von dem Schalter festgestellt wird, dass das Protokoll die Befugnis zum E/A-Dateivorgangsbefehl aufweist, Weitergehen zu Schritt 3); und
falls von dem Schalter festgestellt wird, dass das Protokoll nicht die Befugnis zum E/A-Dateivorgangsbefehl aufweist, Ablehnen des E/A-Dateivorgangsbefehls durch den Schalter und Erzeugen und Zurücksenden einer Ablehnungsnachricht an einen Absender des E/A-Dateivorgangsbefehls durch den Schalter.

4. Verfahren zum Zugreifen auf den schalterexternen Speicher nach Anspruch 1, wobei Schritt 3) ferner umfasst:
Extrahieren eines Index des E/A-Dateivorgangsbefehls und der Parameter aus dem empfangenen E/A-Dateivorgangsbefehl durch den Schalter,
Aufrufen eines entsprechenden lokalen E/A-Dateivorgangsbefehls gemäß den extrahierten Informationen durch den Schalter,
Erzeugen eines Vorgangsergebnisses des entsprechenden lokalen E/A-Dateivorgangsbefehls durch den Schalter,
Einkapseln des Vorgangsergebnisses durch den Schalter in eine Nachricht und dann Rücksenden der Nachricht durch den Schalter an einen Aufrufer.

## Revendications

1. Procédé pour accéder à une mémoire externe de commutateur d'un commutateur, dans lequel un module de commande représente un plan de commande et la mémoire externe de commutateur représente un plan de données, et dans lequel l'accès se fait à partir du module de commande dans le plan de commande vers la mémoire externe de commutateur dans le plan de données, le procédé comprenant :
étape 1), délivrer, par le module de commande, des informations concernant un protocole autorisé et une opération d'entrée/sortie, E/S, de fichier autorisée, l'opération E/S de fichier autorisée étant une opération pour accéder à la mémoire externe de commutateur, recevoir les informations par le commutateur, et stocker des informations autorisées par le commutateur ; les informations autorisées comprenant le protocole autorisé et l'opération E/S de fichier autorisée ;
étape 2), recevoir, par le commutateur, une instruction d'opération E/S de fichier, et déterminer si une entité d'exploitation a ou non une autorité pour effectuer l'opération E/S de fichier autorisée selon l'instruction d'opération E/S de fichier et les informations autorisées obtenues à l'étape 1) ; l'opération E/S de fichier autorisée est l'une parmi des opérations de lecture, d'écriture et de suppression pour un fichier dans un répertoire de la mémoire externe de commutateur, et
étape 3), lors de la détermination du fait que l'entité d'exploitation a l'autorité pour effectuer l'opération E/S de fichier autorisée, extraire, par le commutateur, un indice d'instruction et des paramètres à partir de l'instruction d'opération E/S de fichier, et exécuter l'opération E/S de fichier autorisée.

2. Procédé pour accéder à la mémoire externe de commutateur selon la revendication 1, dans lequel, à l'étape 1), les informations concernant le protocole autorisé et l'opération E/S de fichier autorisée sont délivrées au commutateur dans une liste d'opérations autorisées par le module de commande, la liste d'opérations autorisées étant accomplie en utilisant un ensemble d'opérations de fichier définies dans POSIX.1 par le module de commande.

3. Procédé pour accéder à la mémoire externe de commutateur selon la revendication 1, dans lequel l'étape 2) comprend en outre :
extraire, par le commutateur, lors de la réception de l'instruction d'opération E/S de fichier, le protocole autorisé et un indice de l'instruction d'opération E/S de fichier à partir de l'instruction d'opération E/S de fichier reçue,
comparer, par le commutateur, les informations extraites aux informations autorisées stockées dans le commutateur à l'étape 1),
déterminer, par le commutateur, si le protocole autorisé a ou non l'autorité de l'instruction d'opération E/S de fichier,
dans un cas où il est déterminé par le commutateur que le protocole a l'autorité de l'instruction d'opération E/S de fichier, procéder à l'étape 3) ; et
dans un cas où il est déterminé par le commutateur que le protocole n'a pas l'autorité de l'instruction d'opération E/S de fichier, rejeter, par le commutateur, l'instruction d'opération E/S de fichier et générer et renvoyer, par le commutateur, un message de rejet à un expéditeur de l'instruction d'opération E/S de fichier.

4. Procédé pour accéder à la mémoire externe de commutateur selon la revendication 1, dans lequel l'étape 3) comprend en outre :
extraire, par le commutateur, à partir de l'instruction d'opération E/S de fichier reçue, un indice de l'instruction d'opération E/S de fichier et des paramètres,
demander, par le commutateur, une instruction d'opération E/S de fichier local correspondante selon les informations extraites,
générer, par le commutateur, un résultat d'opération de l'instruction d'opération E/S de fichier local correspondante,
encapsuler, par le commutateur, le résultat d'opération dans un message, puis renvoyer, par le commutateur, le message à un demandeur.
